# EUROPEAN PATENT APPLICATION

(11) **EP 1 705 919 A1**
(43) Date of publication of application: **27.09.2006**
(21) Application number: 06290156.6
(22) Date of filing: 26.01.2006
(51) Int. Cl.: H04N 7/24, H04N 7/16

(54) **Method for signature authentication in a broadcast receiver**

(30) Priority: 07.03.2005 KR 2005018798
(71) Applicant: LG ELECTRONICS INC., Seoul 150-875 (KR)
(72) Inventor: Maeng, Hye Seon c/o 102-314 Seocho Hyundai Apt., Seoul 137-880 (KR); Park, Suk Won c/o 5-303 Singdonga Apt., Seoul 132-020 (KR)
(74) Representative: Loisel, Bertrand

(57) **Abstract**

A method for identifying signature authentication in a broadcast receiver is dislosed, wherein previous signature authentication identification results for files constituting application programs related to data broadcasting are stored, and when next authentication identification is made for a file, a hashing task for the file is selectively performed based on the previous results. This reduces the number of repeated processes performed for signature authentication, and thus, shortens time required for an application program related to data broadcasting being executed.

## Description

This application claims the benefit of the Korean Application No. 10-2005-0018798 filed on March 7, 2005, which is hereby incorporated by reference.

### BACKGROUND OF THE INVENTION

### Field of the Invention

The present invention relates to a method for identifying signature authentication in a broadcast receiver, wherein time required to execute an application program related to data broadcasting can be shortened by reducing the number of repeated processes performed for signature authentication of a file.

### Description of the Related Art

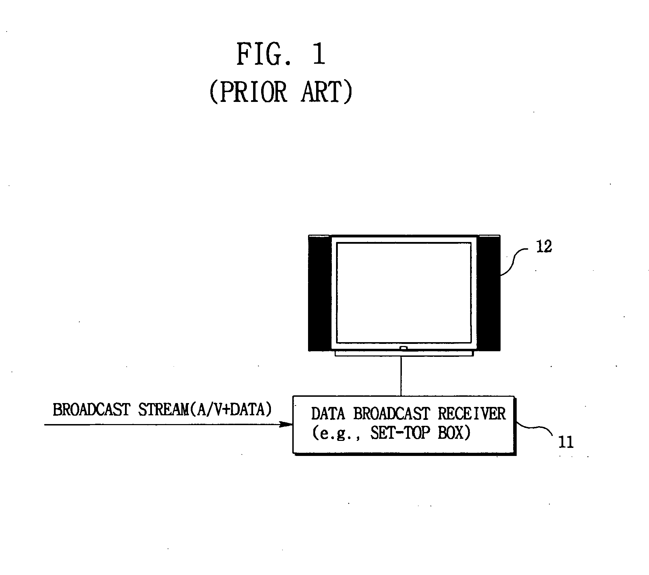

Referring to FIG. 1, an A/V(Audio/Video) signal in a broadcast stream is processed by a broadcast receiver (11) and outputted to a display device, e.g., a digital television receiver (12). Particularly, the broadcast stream includes a variety of application programs for supporting data broadcasting.

In data broadcasting, a broadcasting station affixes a signature to an application program to protect system resources of the broadcast receiver (11), and the broadcast receiver (11) identifies authentication for the application program and then executes the application program.

In other words, according to typical data broadcasting standards, an application program for data broadcasting transmitted by a broadcasting station can use critical system resources of the broadcast receiver (11) only when signature authentication for the application program on the side of the broadcasting station is identified by the broadcast receiver.

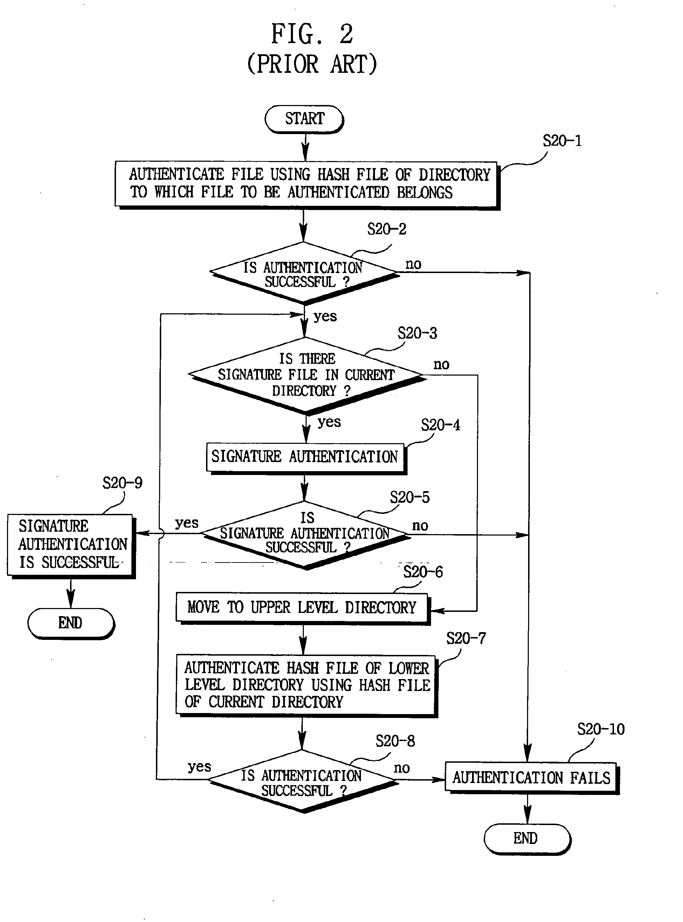

FIG. 2 illustrates an example of such an identification process.

For example, when authentication identification for "target.class" file is requested, the "target.class" file is authenticated using a hash file of a directory to which the "target.class" file belongs (S20-1).

Specifically, it is determined whether a hash value included in the hash file of the directory to which the "target.class" file belongs matches a hash value calculated using the "target.class" file. If they match each other, the authentication is successful. If they do not match each other, the authentication fails and the procedure is terminated (S20-2, S20-10).

When the authentication for the file is completed, authentication identification is performed on directories to which the file belongs.

For example, flow is moved to an upper level directory in step S20-G and a hash file of a lower level directory is authenticated using a hash file of a current directory (S20-7). Details are the same as those of the aforementioned method using the hash value. This identification procedure is repeatedly performed until a root directory where a signature file is located is found.

Finally, after authentication identification has been performed on directories to which the file belongs, authentication identification is performed on the signature file.

For example, it is checked whether a signature file is included in a current directory (S20-3), and if the signature file is included in the current directory, signature authentication is identified using the signature file (S20-4). Depending on the identification results, the signature authentication is determined as being successful (S20-5, S20-9) or as being failed (S20-5, S20-10).

As described above, the authentication ident-ification conforming to the typical data broadcasting standards is carried out in such a manner that direct authentication identification is performed on a file, authentication is then performed on directories to which the file belongs, and authentication identification is finally performed on a signature file in a root directory.

However, since this procedure is repeatedly performed in next authentication identification, there is a problem in that execution time for an application program related to data broadcasting is delayed. In addition, when a hash value is to be generated on a group basis, there is another problem in that all files in a group should be loaded to authenticate one file, resulting in overhead.

### SUMMARY OF THE INVENTION

The present invention is conceived to solve the aforementioned problems. It is an object of the present invention to provide a method for identifying signature -authentication in a broadcast receiver, where by―the number of repeated processes performed for signature authentication of a file is reduced.

According to the present invention for achieving the object, there is provided a method for identifying signature authentication in a broadcast receiver, comprising: receiving an external request to identify whether a file related to a specific task has been subjected to signature authentication by a broadcasting station; generating information required to determine whether the identification can be made using a time-saving task without a hashing algorithm; and performing the identification using the time-saving task according to the information, and outputting results corresponding to the identification to the outside.

After the generation step, the method for identifying signature authentication in a broadcast receiver according to the present invention may further comprise the step of generating assistant information required to generate the information while performing the identification using a standard task with a hashing algorithm based on the generated information.

The step of generating the assistant information may comprise the steps of: determining whether the broadcasting station has authenticated the requested file itself; and, generating information corresponding to the determination as the assistant information in the requested file if it is determined that the requested file has not been authenticated by the broadcasting station.

After the step of generating the corresponding information in the requested file, the method for identifying signature authentication in a broadcast receiver according to the present invention may comprise the step of generating the corresponding information as the assistant information even in files grouped with the requested file related to authentication on the side of the broadcasting station.

The determination step is performed based on whether digest information calculated using the requested file matches standard digest information of the requested file transmitted by the broadcasting station.

Further, if it is determined that the requested file has been authenticated by the broadcasting station, it is determined whether a directory including no signature file has been authenticated by the broadcasting station. If it is determined that the directory has not been authenticated by the broadcasting station, information corresponding to the determination is generated as assistant information in the directory or a file including a descriptor describing the directory.

After the corresponding information is generated in the directory or the file including the descriptor describing the directory, the corresponding information is generated as assistant information even in files grouped with the directory related to authentication on the side of the broadcasting station.

The step of determining whether the directory including no signature file has been authenticated by the broadcasting station is performed based on whether digest information calculated using a hash file of the directory matches standard digest information of the directory transmitted by the broadcasting station.

If it is determined that the requested file has been authenticated by the broadcasting station, it is determined whether a directory including a signature file has been authenticated by the broadcasting station. If it is determined that the directory has not been authenticated by the broadcasting station, information corresponding to the determination is generated as assistant information in the directory or a file including a descriptor describing the directory.

After the step of generating the corresponding information in the file, the corresponding information is generated as assistant information even in files grouped with the directory related to authentication on the side of the broadcasting station.

The step of determining whether the directory including the signature file has been authenticated by the broadcasting station is performed based on whether digest information calculated using a hash file of the directory matches standard digest information of the directory transmitted by the broadcasting station.

If it is determined that the directory has been authenticated by the broadcasting station, the method may further comprise the steps of: determining whether the broadcasting station has made signature authentication; and generating different assistant information based on the determination results.

The step of generating the assistant information may comprise the step of generating information corresponding to the determination results as assistant information in all files related to signature authentication on the side of the broadcasting station.

The assistant information may comprise different identifiers depending on the determination results. For example, the identifiers may include a first flag value indicating "true," a second flag value indicating "false," and a third flag value indicating "null."

The assistant information may comprise different descriptors depending on the determination results. The descriptors include a first descriptor indicating "true," a second descriptor indicating "false," and a third descriptor indicating "null."

### BRIEF DESCRIPTION OF THE DRAWINGS

The above and other objects, features and advantages of the present invention will become apparent from the following description of a preferred embodiment given in conjunction with the accompanying drawings, in which:
FIG. 1 illustrates a typical data broadcast receiver;
FIG. 2 is a flowchart illustrating a typical signature authentication method;
FIGS. 3, 4 and 5 are flowcharts illustrating a signature authentication method according to the present invention; and
FIG. 6 illustrates an example of a data structure according to the present invention.

### DETAILED DESCRIPTION OF THE PREFERRED EMBODIMENTS

Hereinafter, preferred embodiments of the present invention will be described in detail with reference to the accompanying drawings.

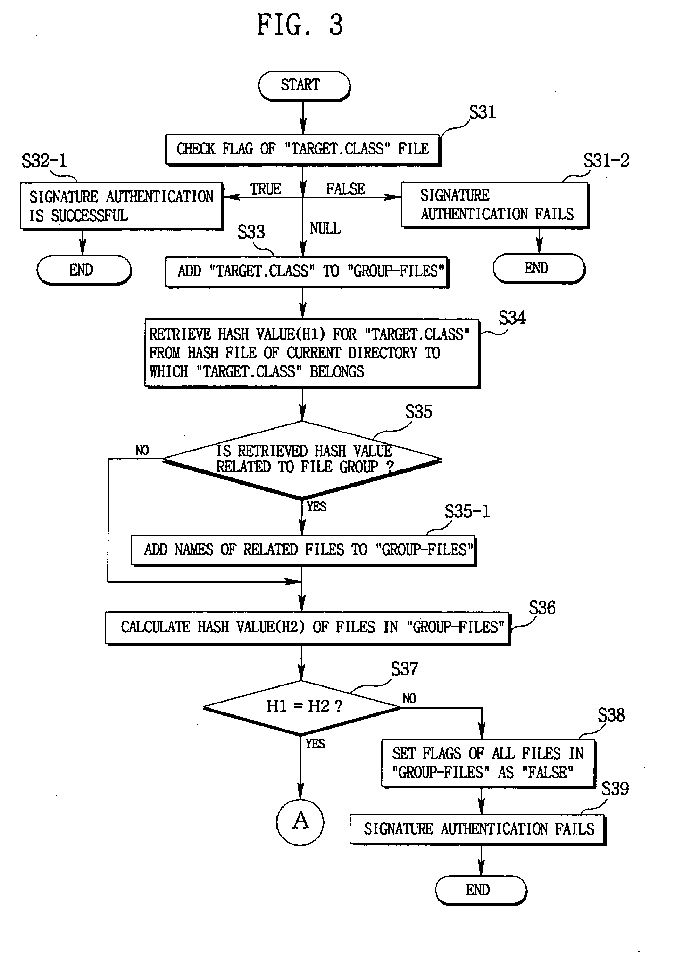

An identification task illustrated in FIG. 3 is one of several tasks constituting a method for identifying signature authentication according to the present invention. The identification task identifies whether a file itself has been authenticated by a broadcasting station. The identification task includes a first task and a second task.

The first task performs the identification using a time-saving task without a hashing algorithm. The second task generates assistant information required to perform the first task while performing the identification using a standard task with a hashing algorithm.

The division of the identification task into tasks referred to as "first task" and "second task" is only for convenience of illustration. The respective tasks may comprise only one or several steps as illustrated in FIG. 3.

First, the first task is performed in the order. The first task may include steps S31, S32-1, and S31-2 in FIG. 3.

In step S31, when there is a request for access to a certain file from an object, information required to determine whether the identification can be made using a time-saving task is generated. The time-saving task does not have a hashing algorithm and performs "a signature authentication identification task" on the requested file by referring to only previous identification results set in the requested file.

When it is determined in step S31 that data indicating the previous identification results for the requested file have been set in any way, it is determined that the identification can be made using the time-saving task, and a current "signature authentication identification task" is then performed (S32-1, S32-2). Then, only the data indicating the results are returned to the object requesting the access to the file, and the entire signature authentication identification task is terminated.

For example, if it is determined in step S31 that the data indicating the previous identification results for the requested file are data indicating "authentication true" or "authentication false," it means that results of both the authentication identification task for the requested file and all subsequent remaining tasks related to signature authentication were "authentication true" or "authentication false."

Therefore, the time-saving task returns a value indicating "authentication true" or "authentication false" to the object requesting the access to the file (S32-1), and terminates the signature authentication identification task.

On the contrary, if it is determined in step S31 that the data indicating the previous identification results for the requested file are data indicating "null," the second task is performed using a standard task with a hashing algorithm, so as to identify whether a broadcasting station has authenticated the requested file.

The data indicating "null" are data indicating that a task for identifying whether a broadcasting station has authenticated the requested file has not been performed at all. The "data indicating the previous identification results" are generated after authentication for the file has been identified. Related details will be explained in connection with a file authentication identification task to be described later.

If there are the previous identification results for the requested file, the first task performs the "signature authentication identification task" on the requested file using the "time-saving task," thereby saving time and resources that may be consumed due to hashing.

If it is determined in step S31 that there are no previous identification results for the requested file, the second task is performed using the standard task, so as to identify whether the broadcasting station has authenticated the requested file.

The second task generates assistant information required to perform the first task while performing the identification using the standard task with a hashing algorithm. The second task may include steps S33, S34, S35, S36 and S37 shown in FIG. 3.

The second task uses any one of a first method for individually identifying only the requested file and a second method for collectively identifying the requested file and several files grouped with the request file.

Among the methods, a method to be used is determined based on a hashing scheme specified in the requested file. The hashing scheme is specified by a broadcasting station and then transmitted to a broadcast receiver. An agreement may be made such that information on identification of the hashing scheme is to be included in a hash file of a sub-directory to which the requested file directly belongs.

The respective steps S33, S34, S35, S36 and S37 of FIG. 3 are an example of a task for identifying files on a group basis using the second method and will be described below.

First, a storage (indicated by "group-files" in FIG. 3) for temporarily assembling information on the requested file and all files needed upon authentication is provided. The storage (i.e., group-files) is a storing space that is set/reset in response to initiation and termination of the signature authentication identification task.

After the storage is provided, files needed for authentication identification, i.e., the requested file and files grouped with the requested file, are retrieved, and the names of the corresponding files are registered in the storage. To this end, steps S33, S34, S35 and S35-1 may be included.

In step S33, information on the requested file, e.g., the name of the requested file, is registered in the storage.

In step S34, information on the files grouped with the requested file is retrieved. For example, a hash value linked to the same file name as the name of the requested file is searched from the hash file of the sub-directory to which the requested file belongs, and files that are needed to calculate the hash value and set and liked to the hash value by the broadcasting station, i.e., the files grouped with the requested file, are read out (S35). As a result, the information on the files grouped with the requested file can be retrieved.

In step S35-1, the files grouped with the requested file are registered in the storage (i.e., group-files). That is, the files read out in step S35 are additionally registered in the storage (i.e., group-files). Now, the hash value of the requested file is ready to be calculated.

After the hash value of the requested file is ready to be calculated, it is identified using the hash value whether the broadcasting station has authenticated the file. To this end, steps S36 and S37 may be included.

In step S36, the hash value is calculated. After the requested file and the files grouped with the file are all loaded, a code corresponding to the name of each file and a code corresponding "data describing the file" are read out from the file. A hashing algorithm is executed using each code as an input parameter to calculate a hash value, e.g., a digest message.

The "data describing the file" may be a code corresponding to the entire contents of the file or a code corresponding to a file descriptor for describing the file. An agreement may be made as to which one of the codes is to be used.

The "hashing algorithm" is prepared by the broadcasting station and transmitted to the broadcast receiver. Preferably, the hashing algorithm is included in the hash file of the sub-directory to which the requested file directly belongs, and the digest message has a fixed size in the same manner as-a typical digest message.

In step S37, it is identified using the hash value whether the broadcasting station has authenticated the requested file. After the hash value is calculated in step S36, a predetermined task compares the calculated hash value with a hash value (corresponding to "authentication key") set by the broadcasting station and encrypted in the hash file. It is identified using the comparison results whether the broadcasting station has authenticated the requested file. In this case, it is also identified whether the broadcasting station has authenticated all the files grouped with the requested file and registered in the temporary storage.

For example, in step S37, if the hash value is set as the digest message and the calculated digest message is the same as the preset digest message, it is determined that the broadcasting station authenticates the requested file and the files registered in the storage.

On the other hand, if the calculated digest message is different from the preset digest message, it is determined that the broadcasting station does not authenticate the requested file and the files registered in the storage. In such a manner, it is identified whether the broadcasting station has authenticated the requested file.

After it is identified by the second task whether the broadcasting station has authenticated the requested file, a task for setting data indicating the results is performed. To this end, steps S38 and S39 may be included.

More specifically, if it is identified that the broadcasting station does not authenticate the requested file and the files registered in the storage, this task sets an identifier or descriptor for indicating authentication false (←true) for each file.

For example, a flag indicating "false" may be set for each of the requested file and files registered in the temporary storage, as performed in step S38. Information set in such a manner will be used as assistant information according to the present invention in next authentication identification for the file.

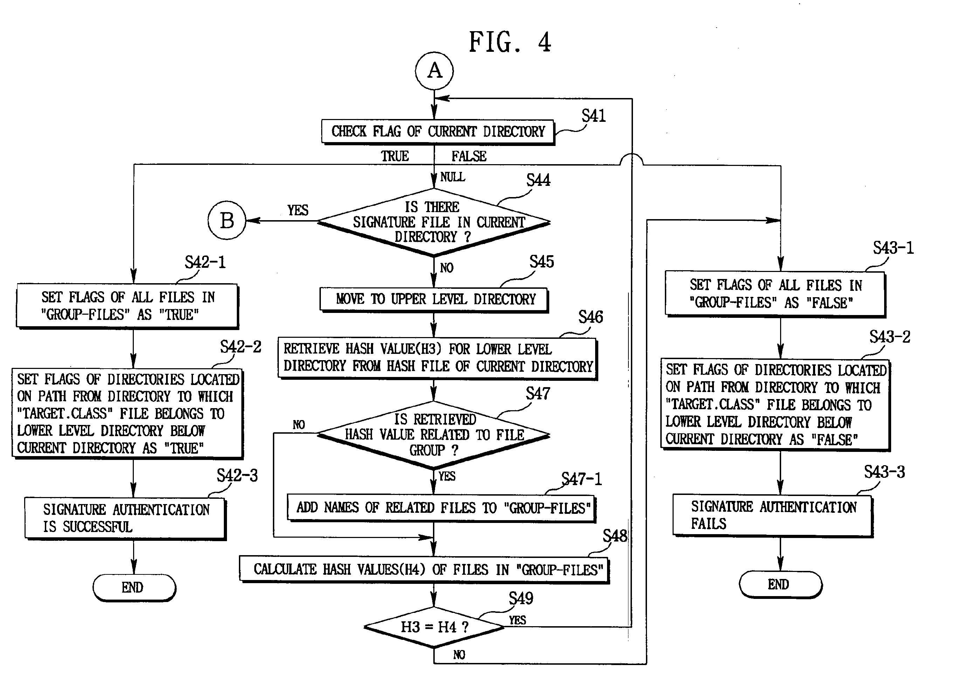

Meanwhile, the value indicating "false" is returned to the object requesting the access to the file, and all the signature authentication identification -tasks are terminated. When it is identified in step S37 that the broadcasting station authenticates the requested file, an identification task illustrated in FIG. 4 proceeds.

As described above, the identification task illustrated in FIG. 3 selectively performs a current "signature authentication identification task" based on previous identification results set to a corresponding file before identifying whether the broadcasting station has authenticated the file, thereby reducing waste of time and resources needed for the signature authentication.

The identification task illustrated in FIG. 4 is one of several tasks constituting the signature authentication identification task according to the present invention. In this identification task, it is identified whether the broadcasting station has authenticated the sub-directory to which the requested file belongs.

More specifically, it is identified whether the broadcasting station has authenticated that the sub-directory itself belongs to an immediate upper level sub-directory. The task includes a third task and a fourth task.

The third task performs the identification using a time-saving task without a hashing algorithm and generates assistant information required to perform the third task while performing the identification, using a standard task with a hashing algorithm.

The division of the identification task into tasks referred to as "third task" and "fourth task" is only for convenience of illustration. The respective tasks may comprise only one or several ones of the steps illustrated in FIG. 4.

The third task is first performed in order. The third task includes steps S41, S42-1, S42-2, S42-3, S43-1, S43-2 5 and S43-3.

In step S42-1, it is checked whether there are previous identification results for the sub-directory and what the results are. The results can be checked using a flag value set in the sub-directory.

Steps S42-1, S42-2 and S42-3 are performed when the identification results in step S41 indicate "authentication true."

For example, when it is determined in step S41 that data indicating the previous identification results are data indicating "authentication true," the data mean that both the identification task for the sub-directory and subsequent remaining tasks related to the signature authentication are "authentication true."

Accordingly, the time-saving task no longer performs remaining tasks. Then, a flag indicating "true" is set for all files that are registered in the temporary storage and remain as "null" (S42-1). Thereafter, a value indicating "authentication true" is returned to the object requesting the access to the file (S42-3) and the signature authentication identification task is terminated.

In another instance, the sub-directory identified in step S41 may not be the sub-directory to which the requested file directly belongs but may be an upper level sub-directory over the sub-directory.

In this case, the time-saving task sets a flag indicating "true" for files that are registered in the -storage- and remain as "null" (S42-1).

The time-saving task also sets a flag indicating "true" for the sub-directory to which the file directly belongs and all lower level sub-directories below the upper level sub-directory (S42-2). Then, a value indicating "authentication true" is returned to the object requesting the access to the file (S42-3) and the signature authentication identification task is terminated.

Meanwhile, steps S43-1, S43-2 and S43-3 are performed when the identification results in step S41 indicate "authentication false."

For example, when it is determined in step S41 that the data indicating the previous identification results are data indicating "authentication false," the data mean that both the identification task for the sub-directory and subsequent remaining tasks related to the signature authentication are "authentication false." Accordingly, the time-saving task no longer performs remaining tasks. Then, a flag indicating "false" is set for all files that are registered in the temporary storage and remain as "null" (S43-1). Thereafter, a value indicating "authentication false" is returned to the object requesting the access to the file (S42-3) and the signature authentication identification task is terminated.

In another instance, the sub-directory identified in step S41 may not be the sub-directory to which the requested file directly belongs but may be an upper level sub-directory over the sub-directory.

In this case, a flag indicating "false" is set for files registered in the storage (S43-1). A flag indicating "false" is set for the sub-directory to which the file directly belongs and all lower level sub-directories below the upper level sub-directory (S43-2).

The value indicating "authentication false" is delivered to the object requesting the access to the file (S43-3) and the signature authentication identification task is terminated.

Finally, if it is determined in step S41 that the data indicating the previous identification results are data indicating "null," it means that a task for identifying whether the broadcasting station has authenticated the sub-directory has not been performed on the sub-directories at all.

Accordingly, contrary to the foregoing, only this case performs a fourth task for identifying whether the broadcasting station has authenticated the sub-directory using the standard task.

As described above, the third task performs the signature authentication identification task only when there are no previous identification results for the sub-directory, and does not perform an additional signature authentication identification task on the requested file when there are the previous identification results for the sub-directory, thereby reducing waste of required time and resources.

Meanwhile, if it is determined in step S41 that there are no previous identification results for the sub-directory, the fourth task for identifying whether the broadcasting station has authenticated the sub-directory is performed in the following manner.

The fourth task searches files needed for sub-directory authentication identification and registers the names of the files in -the storage. To this end, the fourth task may include steps S45, S46, S47 and S47-1.

In step S45, movement to an upper level directory is made. In step S46, information on the files needed for the sub-directory authentication identification, i.e., files needed for calculation of a hash value of the sub-directory, is searched.

For example, a hash value linked to the same name as the sub-directory is searched in a hash file of the upper level directory, and files that are required to calculate the hash value and set and liked to the hash value by the broadcasting station, i.e., files grouped in the sub-directory, are read out (S47). As a result, information on the files grouped with the requested file can be retrieved.

In step S47-1, the grouped files are registered in the storage (i.e., group-files). That is, the files retrieved in step S46 are additionally registered in the storage (i.e., group-files). Now, the hash value of the requested file is ready to be calculated.

After the hash value of the requested file is ready to be calculated, it is identified using the hash value whether the broadcasting station has authenticated the sub-directory. To this end, steps S48 and S49 may be included.

In step S48, the hash value is calculated. A file describing the sub-directory and files grouped with the file are all loaded. Then, a code corresponding to the name of each file and a code corresponding "data describing the file" are read out from the file. A hashing algorithm is executed using each code as an input parameter to calculate a hash value, e.g., a digest message.

In step S49, it is identified using the hash value whether the broadcasting station has authenticated the sub-directory. After the hash value is calculated in step S49, the calculated hash value is compared with a hash value (corresponding to "authentication key") set by the broadcasting station and encrypted in the hash file. It is identified using the comparison results whether the broadcasting station has authenticated the sub-directory. In this case, it is also identified whether the broadcasting station has authenticated all the files grouped with the requested file and registered in the temporary storage.

For example, in step S49, if the hash value is set as the digest message and the calculated digest message is the same as the preset digest message, it is determined that the broadcasting station authenticates the requested file and the files registered in the storage. On the other hand, if the calculated digest message is different from the preset digest message, it is determined that the broadcasting station does not authenticate the requested sub-directory and the files registered in the storage. In such a manner, it is identified whether the broadcasting station has authenticated the sub-directory.

After it is identified in step S49 whether the broadcasting station has authenticated the sub-directory, a task for setting data indicating the results is performed.

If it is identified that the broadcasting station does not authenticate the sub-directory and all the files registered in the temporary storage, this task sets an identifier or descriptor indicating "authentication false" for each file.

For example, -a flag indicating "false" may be -set for the sub-directory and each of the files registered in the temporary storage, as performed in step S43-1. Information set in such a manner will be used as useful information in next authentication identification for the file.

In another instance, through circulation of several steps illustrated in FIG. 4, there may be a case where a currently identified sub-directory is not the sub-directory to which the requested file directly belongs but is an upper level sub-directory over the sub-directory. In this case, a flag indicating "false" is set for the files registered in the storage (S43-1) and a flag indicating "False" is set for the sub-directory to which the file directly belongs and all lower level sub-directories below the upper level sub-directory (S43-2).

A value indicating "authentication false" is delivered to the object requesting the access to the file (S43-3) and the signature authentication identification task is terminated.

As described above, the identification task illustrated in FIG. 4 first checks previous identification results before identifying whether the broadcasting station has authenticated that the sub-directory belongs to the upper level sub-directory, and then selectively performs the identification task using the hashing algorithm, thereby reducing time required for the authentication.

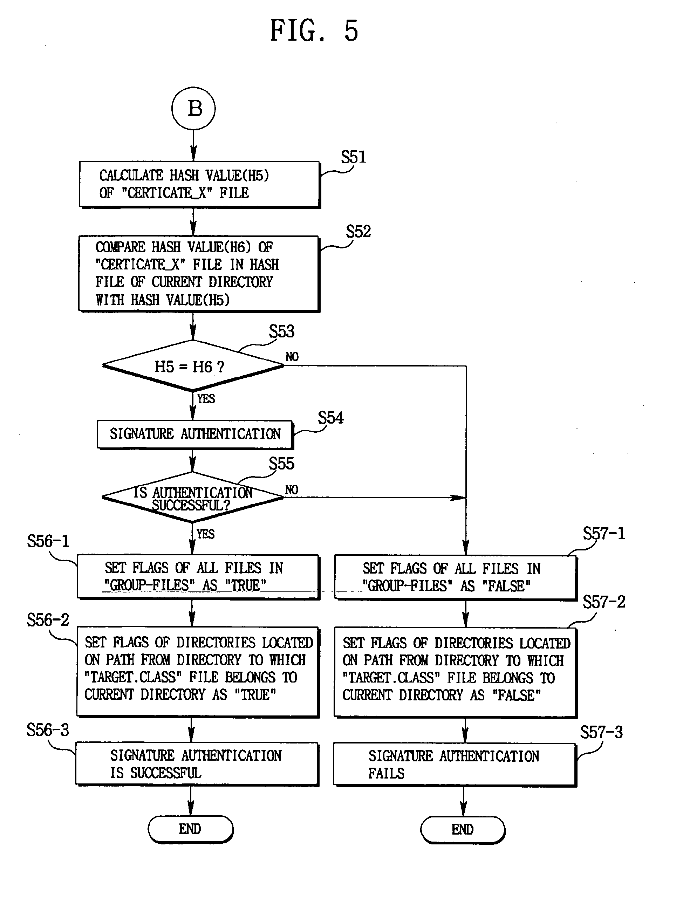

An identification task illustrated in FIG. 5 is a last task of the signature authentication identification tasks according to the present invention. This identification task is a task for identifying whether the broadcasting station has authenticated a signature file included in a root directory (denoted as "certificate_x file" in FIG. 5) and the signature itself.

To identify whether the broadcasting station has authenticated the signature file, the identification task first executes a hashing algorithm written in a hash file included in the root directory to calculate a hash value of the signature file (S51). The input parameter may be a descriptor for the signature file.

If the hash value calculated in step S41 is different from the hash value written in the hash file, the signature file is considered as not being a signature file authenticated by the broadcasting station and a flag indicating "false" is set for all files that are registered in the temporary storage and remain as "null" (S57-1).

In addition, a flag indicating "false" is set for all directories located on a path from the directory to which the requested file belongs to the current directory, i.e., root directory (S57-2), a value indicating "authentication false" is delivered to the object requesting the access to the file (S57-3), and the signature authentication identification task is terminated.

On the other hand, if the hash value calculated in step S41 is the same as the hash value written in the hash file, the signature file is considered as a signature file authenticated by the broadcasting station, and it is finally performed using the signature file whether the signature itself is authenticated by the broadcasting station (S54).

In step S54, a signature value corresponding to a public key value is calculated from the signature file authenticated in step S53 and the signature value is compared with a signature value included in the signature file of the root directory (S55).

If it is determined in step S55 that the calculated signature value is the same as the signature value included in the signature file, a flag indicating "true" is set for all files that are registered in the temporary storage and remain as "null."

In addition, a flag indicating "true" is set for all directories located on the path from the directory to which the requested file belongs to the current directory, i.e., root directory (S56-2), a value indicating "authentication true" is delivered to the object requesting the access to the file (S56-3), and the signature authentication identification task is terminated.

On the other hand, if it is determined in step S55 that the calculated signature value is different from the signature value included in the signature file, a flag indicating "false" is set for all files that are registered in the temporary storage and remain as "null" (S57-1).

In- addition, a flag indicating "false" is set for all directories located on the path from the directory to which the requested file belongs to the current directory, i.e., root directory (S57-2), a value indicating "authentication true" is delivered to the object requesting the access to the file (S57-3), and the signature authentication identification task is terminated.

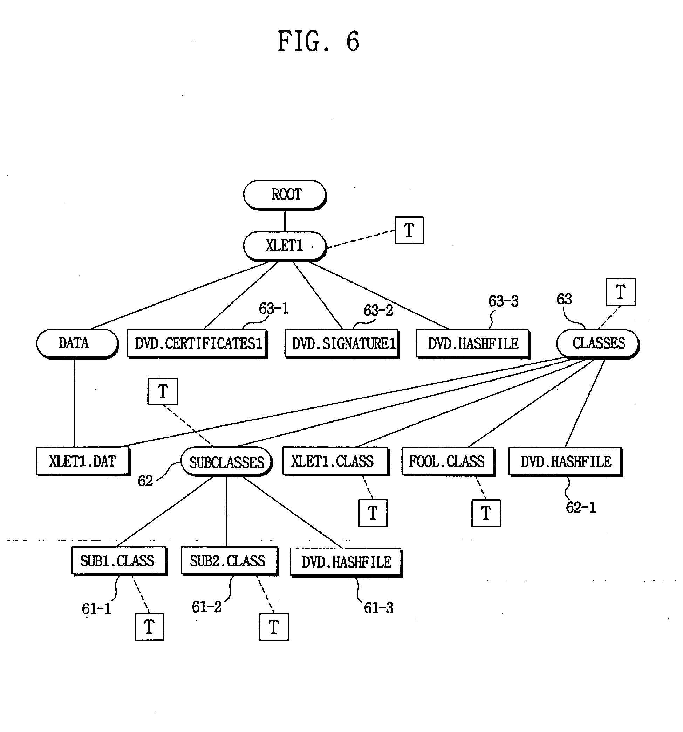

In an example of a data structure according to the present invention shown in FIG. 6, "Xlet1" directory is located below a root directory, "data" directory and "classes" directory (63) are located below "Xlet1" directory, and "subclasses" directory (62) is located below "classes" directory (63). The respective directories include several files.

According to the present invention, the process of authenticating a file includes a direct hash value identification process for the file, a hash value identification process for each of grouped files, a hash value identification process for a directory to which the file belongs and an upper level directory, a signature file authentication process, and the like. The respective processes are continuously repeated whenever signature identification for all files is performed.

For example, if "sub1.class" file (61-1) and "sub2.class" file (61-2) constitute a group and only one hash value for a file obtained by combining the two files is stored in a hash file, signature authentication for "sub1.class" file (61-1) involves signature authentication for "sub2.class" file (61-2).

Further, authentication for a hash file (61-3) in a lower level directory using a hash file (62-1) of an upper level directory and authentication for the hash file (62-1) in a lower level directory using a hash file (63-3) in an upper level directory are also involved. This process is equally performed even when "sub2.class" file (61-2) is authenticated, resulting in repetitive authentication.

However, if signature authentication is finally made for any file through the signature files (63-1, 63-2), it may be considered that authentication for each directory on a path has been completed. It may also be considered that determination has been made as to whether other files in a group which each file belongs are to be authenticated. According to the present invention, the results (e.g., T) of signature authentication performed are denoted in a flag of each file or directory, so that a relevant procedure can be omitted upon receipt of a next request for signature authentication;

## Claims

1. A method for identifying signature authentication in a broadcast receiver, comprising:
receiving an external request to identify whether a file related to a specific task has been subjected to signature authentication by a broadcasting station;
generating information required to determine whether the identification can be made using a time-saving task without a hashing algorithm; and
performing the identification using the time-saving task according to the information, and outputting results corresponding to the identification to the outside.

2. The method as claimed in claim 1, further comprising the step of generating assistant information required to generate the information while performing the identification using a standard task with a hashing algorithm based on the generated information.

3. The method as claimed in claim 2, wherein the step of generating the assistant information comprises:
determining using the standard task whether the broadcasting station has authenticated the requested file itself; and
generating information corresponding to the determination as the assistant information if it is determined that the requested file has not-been authenticated by the broadcasting station.

4. The method as claimed in claim 3, further comprising:
generating the same information as the assistant information for each of the files.
if it is determined that there are files grouped with the requested file related to the authentication on the side of the broadcasting station.

5. The method as claimed in claim 3, wherein the determination step is performed based on whether digest information calculated using the requested file matches standard digest information of the requested file transmitted by the broadcasting station.

6. The method as claimed in claim 3, further comprising:
generating information required to determine weather authentication identification for a directory including no signature file can be made using the time-saving task.
if it is determined that the requested file has been authenticated by the broadcasting station; and
performing the identification using the time-saving task based on the information, and outputting results corresponding to the identification to the outside.

7. The method as claimed in claim 6, after the generating step, further comprising the step of generating assistant information required to generate the information while performing the identification using the standard task based on the information.

8. The method as claimed in claim 7, wherein the step of generating the assistant information comprises:
determining whether a directory has been authenticated by the broadcasting station; and
generating different assistant information based on the determination results.

9. The method as claimed in claim 8, wherein the determination step is performed based on whether digest information calculated using a hash file of the directory matches standard digest information of the directory transmitted by the broadcasting station.

10. The method as claimed in claim 7, further comprising:
generating the same information as the assistant information for each of the files.
if it is determined that there are a plurality of files related to the signature authentication on the side of the broadcasting station.

11. The method as claimed in claim 3, further comprising:
generating information required to determine whether identification as to whether a directory including a signature file has been authenticated by the broadcasting station can be made using the time-saving task
if it is determined that the requested file has been authenticated by the broadcasting station; and
performing the identification using the time-saving task based on the information, and outputting results corresponding to the identification to the outside.

12. The method as claimed in claim 11, further comprising the step of generating assistant information required to generate the information while performing the identification using the standard task based on the generated information

13. The method as claimed in claim 11, wherein the step of generating the assistant information comprises:
determining whether the directory has been authenticated by the broadcasting station; and
generating different assistant information based on the determination results.

14. The method as claimed in claim 11, wherein the determination step is performed based on whether digest information calculated using a hash file of the directory matches standard digest information of the directory transmitted by the broadcasting station.

15. The method as claimed in claim 13, wherein the step of generating the assistant information further comprises the step of generating assistant information required to generate the information while performing the identification using the standard task based on the information.

16. The method as claimed in claim 13, further comprising:
determining whether the broadcasting station has made signature authentication.
if it is determined that the directory has been authenticated by the broadcasting station; and
generating different assistant information based on the determination results.

17. The method as claimed in claim 16, wherein the step of generating the assistant information comprises: generating the same information as the assistant information for each of the files.
if there are a plurality of files related to the signature authentication on the side of the broadcasting station.

18. The method as claimed in claim 2, wherein the assistant information comprises different identifiers.

19. The method as claimed in claim 18, wherein the identifiers comprise a first flag value indicating "true," a second flag value indicating "false," and a third flag value indicating "null."

20. The method as claimed in claim 2, wherein the assistant information comprises different descriptors.

21. The method as claimed in claim 20, wherein the descriptors comprise a first descriptor indicating "true," a second descriptor indicating "false," and a third descriptor indicating "null."
